# EUROPÄISCHE PATENTSCHRIFT

(11) **EP 2 602 126 B1**
(45) Veröffentlichungstag und Bekanntmachung des Hinweises auf die Patenterteilung: **10.01.2018**
(21) Anmeldenummer: 12193531.6
(22) Anmeldetag: 21.11.2012
(51) Int. Cl.: B60C 11/03

(54) **Fahrzeugluftreifen**
Pneumatic tyre for a vehicle
Pneu de véhicule

(30) Priorität: 09.12.2011 DE 102011056234
(43) Veröffentlichungstag der Anmeldung: 12.06.2013
(73) Patentinhaber: Continental Reifen Deutschland GmbH, 30165 Hannover (DE)
(72) Erfinder: Sevenich, Martin, 60438 Frankfurt (DE); Plückers, Matthias, 30952 Ronnenberg (DE)
(74) Vertreter: Finger, Karsten

(56) Entgegenhaltungen:
- EP-A1- 0 625 436
- EP-A1- 1 541 380
- EP-A2- 0 989 000
- DE-A1- 2 263 455
- US-A- 5 048 583

## Beschreibung

Die Erfindung betrifft einen PKW-Fahrzeugluftreifen mit höherer Geschwindigkeitsanforderung mit einem Laufstreifenprofil mit Profilelementen, wobei einige dieser Profilelemente Sacklöcher aufweisen, wobei die Profilelemente, welche die Sacklöcher aufweisen, ausschließlich Profilblöcke einer über den Reifenumfang umlaufenden Schulterblockreihe sind und wobei diese Schulterblockreihe - im am Fahrzeug montierten Reifen - im zum Fahrzeuginneren weisenden Schulterbereich liegen.

Ein derartiger PKW-Fahrzeugluftreifen ist beispielsweise aus der EP 1 541 380 A1 bekannt. Die Profilblöcke einer zum Fahrzeuginneren weisenden Schulterblockreihe des PKW-Reifens weisen dabei Sacklöcher zur Beeinflussung des Verlaufs der Steifigkeit des Laufstreifenprofils über die Breite des Laufstreifenprofils sowie zur Verbesserung der Abnutzung auf.

Ein Fahrzeugluftreifen aufweisend Sacklöcher ist auch aus der DE 295 19 500 U1 bekannt. In der Beschreibungseinleitung der vorgenannten Druckschrift wird ein Hochgeschwindigkeits-PKW-Reifen beschrieben, der eine asymmetrische Laufstreifengestaltung für ein verbessertes Kurvenverhalten aufweist. In den Profilelementen des fahrzeugäußeren Laufstreifenbereiches sind Sacklöcher angeordnet. Welchen Effekt diese im fahrzeugäußeren Laufstreifenbereich angeordneten Sacklöcher bewirken, ist nicht explizit beschrieben.

Aus der US 5 048 583 A ist ein Luftreifen für Schwerlasttransporter bekannt geworden, der zur Vermeidung von Wärmeakkumulation in den Profilelementen beider Schulterblockreihen Feineinschnitte aufweist, wobei mittig in jedem Feineinschnitt ein Sackloch angeordnet ist.

"Profilelemente" sind Elemente die Profilpositive bilden, wie beispielsweise über den Laufstreifenumfang durchgängig umlaufende sogenannte Profilbänder oder durch Quernuten unterteilte sogenannte Profilblöcke.

Während des Betriebes des Reifens entsteht Wärme. Je stärker ein Reifen im Fahrbetrieb beansprucht wird, um so stärker ist dessen Wärmeentwicklung. Der Kautschuk, aus dem der Reifen im Wesentlichen besteht, ist bekanntermaßen ein schlechter Wärmeleiter. Daher kommt es insbesondere im Hochgeschwindigkeitseinsatz von PKW-Reifen im Laufstreifen zu hitzebedingten sogenannten Auskochungen. Auskochungen können sich in Form von Löchern zeigen, die im Profilelement durch thermische Zerstörung des Profilelementes entstehen. Der Reifen wird durch Auskochungen unbrauchbar.

Der Erfindung liegt die Aufgabe zu Grunde, einen PKW-Luftreifen der eingangs genannten Art derart zu gestalten, dass dieser in seiner Dauerhaltbarkeit verbessert ist.

Gelöst wird die gestellte Aufgabe erfindungsgemäß dadurch, dass - in Bezug auf die Reifenrotationsrichtung - das Sackloch in der hinteren, die Auslaufkante des Profilblockes beinhaltenden Profilblockhälfte angeordnet ist.

"Schulterbereich" meint den Randbereich des Laufstreifenprofils, der je nach Reifenbreite und Profildesign ein oder mehrere Profilelemente beinhalten kann. "Sackloch" meint eine lochartige Aussparung, die jedoch das Bauteil -hier die maximale Profiltiefe- nicht vollständig durchdringt.
"Auslaufkante" meint diejenige Kante eines Profilblockes, welche quer zur Reifenumfangsrichtung angeordnet ist und welche im Reifendurchlauf als letzte Kante mit der Fahrbahnoberfläche Kontakt hat.
"Maximale Profiltiefe" meint den radialen Abstand von der Profiloberfläche bis zum tiefsten Nutgrund der Profilnuten.

Die zum Fahrzeuginneren weisende Schulterblockreihe des Reifenlaufstreifens ist im am Fahrzeug montierten Zustand durch den Radsturz des Fahrzeuges besonders belastet, so dass die Profilblöcke dieser fahrzeuginneren Schulterreihe besonders zu unerwünschten Auskochungen neigen. Diese Auskochungen werden wirkungsvoll vermieden, wenn Sacklöcher in den Profilblöcken dieser fahrzeuginneren Schulterblockreihe angeordnet sind. Durch die Sacklöcher wird die Kühlung des Blockes verbessert, da die Oberfläche des Blockes zur Luft vergrößert wird und kurze Strecken der Wärmeableitung zur Umgebung realisiert sind, so dass die Auskochungen erst gar nicht entstehen.
Dabei wird die Steifigkeit des Blockes nur gering beeinflusst.
Vorteilhafterweise ist das Sackloch derart in dem Profilblock positioniert, dass die Längsachse des Sackloches in etwa parallel zur Radialrichtung des Reifens ausgerichtet ist.

Es hat sich gezeigt, dass Auskochungen in genau derjenigen Hälfte des Profilelementes entstehen, die die Auslaufkante des Profilblockes beinhaltet. Die kühlenden Sacklöcher dort anzuordnen, hat den Effekt, dass die Dauerhaltbarkeit des Reifens weiterhin verbessert ist.

Vorteilhaft ist es, wenn jeder Profilblock der Schulterblockreihe, welche im zum Fahrzeuginneren weisenden Schulterbereich liegt, je ein Sackloch aufweist. Hierdurch ist die Dauerhaltbarkeit des Reifens weiterhin verbessert.

Zweckmäßig ist es, wenn das Sackloch derart im Profilblock positioniert ist, dass die Sacklochkante wenigstens 5 mm von jeder Profilblockkante entfernt angeordnet ist. Die Stabilität des Profilblockes bleibt trotz des angeordneten Sackloches weitestgehend erhalten.

Vorteilhaft ist es, wenn das Sackloch an der Laufstreifenoberfläche einen Durchmesser von 5 mm bis 15 mm, vorzugsweise von 7 mm bis 9mm, aufweist. Bei zu kleinen Sacklöchern wird keine optimale Kühlwirkung erreicht und bei zu großen Sacklöchern ist ein Steifigkeitsabfall des Blockes zu verzeichnen.

Vorteilhaft ist es, wenn das Sackloch eine Tiefe von maximal der Profiltiefe, vorzugsweise eine Tiefe von 50% bis 100% der maximalen Profiltiefe aufweist. Je tiefer das Sackloch desto besser ist die Wärmeabfuhr, die je nach Konstruktion des Reifens in einem unterschiedlichen Bereich liegen kann.

Zweckmäßig ist es, wenn eine Nut im Profilblock angeordnet ist, welche das Sackloch mit einer diesen Profilblock begrenzenden Profilrille verbindet. Die Nut dient dem Ablassen der in dem Sackloch komprimierten Luft für ein optimiertes Geräuschverhalten des Reifens.

Zweckmäßig ist es, wenn das Sackloch in Profilaufsicht eine runde oder ovale Form aufweist, da damit keine Kerbwirkung auf die Struktur ausgeübt wird und im Fahrbetrieb keine Risse im Block auftreten.

Vorteilhaft ist es, wenn das Sackloch in etwa die Geometrie eines Kegelstumpfes aufweist, wobei der größere Durchmesser des Kegelstumpfes in der Ebene der Laufstreifenoberfläche und der kleinere Durchmesser im Profilelementinneren liegt sowie wobei die Längsachse des Kegelstumpfes in etwa der radialen Richtung des Reifens entspricht. Durch diese Gestaltung können im Fahrbetrieb aufgesammelte Objekte nicht im Sackloch stecken bleiben.

Ein PKW-Reifen mit höherer Geschwindigkeitsanforderung ist für Geschwindigkeiten von größer gleich 270 km/h geeignet.

Ein PKW-Reifen mit höherer Geschwindigkeitsanforderung ist für Geschwindigkeiten von größer gleich 270 km/h geeignet.

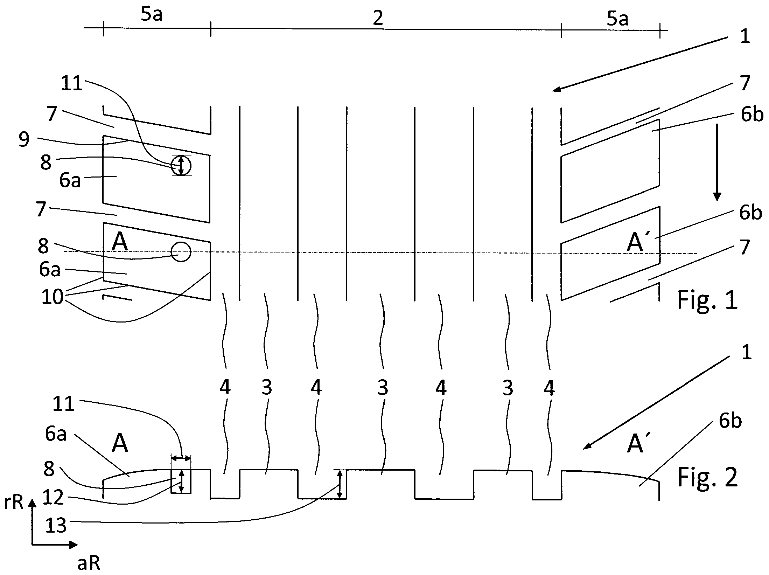

Abschnitt des Laufstreifenprofils der Fig. 1 zeigt. Beide Figuren werden nachfolgend gemeinsam beschrieben.

Das Laufstreifenprofil 1 des erfindungsgemäßen Fahrzeugluftreifens weist Profilelemente auf. Diese Profilelemente sind im mittigen Bereich 2 des Laufstreifenprofiles 1 Profilbänder 3, welche durch in Reifenumfangsrichtung (Pfeil) umlaufende Längsnuten 4 in axialer Richtung voneinander getrennt angeordnet sind. Die Profilelemente in den Schulterbereichen 5a, 5b sind Profilblöcke 6a, 6b, welche in Reifenumfangsrichtung durch Quernuten 7 voneinander getrennt sind. Die Profilblöcke 6a bilden eine Schulterblockreihe, die -im am Fahrzeug montierten Reifen - zum fahrzeuginneren weist und sturzbelastet ist. Die Profilblöcke 6b bilden die andere Schulterblockreihe, die -im am Fahrzeug montierten Reifen - zum fahrzeugäußeren weist. Jeder Profilblock 6a der sturzbelasteten Schulterblockreihe weist je ein Sackloch 8 auf. Jedes Sackloch 8 ist - in Bezug auf die Reifenumfangsrichtung (Pfeil) - in der hinteren, die Auslaufkante 9 des Profilblockes 6a beinhaltende Profilblockhälfte angeordnet. Das Sackloch 8 ist derart im Profilblock 6a positioniert, dass die Sacklochkante wenigstens 5 mm von jeder Profilblockkante 9, 10 entfernt ist. Das Sackloch 8 weist an der Laufstreifenoberfläche einen Durchmesser 11 von 8 mm und eine Tiefe 12 von 75% der maximalen Profiltiefe 13 auf. In Aufsicht weist jedes Sackloch 8 eine runde Form auf.

### Bezugszeichenliste

- 1: Laufstreifenprofil
- 2: mittiger Bereich
- 3: Profilband
- 4: Längsnut
- 5a: Schulterbereich (fahrzeuginnen)
- 5b: Schulterbereich (fahrzeugaußen)
- 6a: Profilblock Schulterblockreihe (fahrzeuginnen)
- 6b: Profilblock Schulterblockreihe (fahrzeugaußen)
- 7: Quernut
- 8: Sackloch
- 9: Auslaufkante
- 10: Profilblockkante
- 11: Durchmesser Sackloch
- 12: Tiefe Sackloch
- 13: maximale Profiltiefe

- aR: axiale Richtung
- rR: radiale Richtung

## Patentansprüche

1. PKW-Fahrzeugluftreifen geeignet für Geschwindigkeiten größer gleich 270 km/h mit einem Laufstreifenprofil (1) mit Profilelementen (3, 6), wobei einige dieser Profilelemente (3, 6) Sacklöcher (8) aufweisen, wobei die Profilelemente, welche die Sacklöcher (8) aufweisen, ausschließlich Profilblöcke (6a) einer über den Reifenumfang umlaufenden Schulterblockreihe sind und wobei diese Schulterblockreihe - im am Fahrzeug montierten Reifen - im zum Fahrzeuginneren weisenden Schulterbereich (5a) liegen,
**dadurch gekennzeichnet,**
**dass** - in Bezug auf die Reifenumfangsrichtung - das Sackloch (8) in der hinteren, die Auslaufkante (9) des Profilblockes (6a) beinhaltenden Profilblockhälfte angeordnet ist.

2. Fahrzeugluftreifen nach Anspruch 1, **dadurch gekennzeichnet, dass** jeder Profilblock (6a) der Schulterblockreihe, welche im zum Fahrzeuginneren weisenden Schulterbereich (5a) liegt, je ein Sackloch (8) aufweist.

3. Fahrzeugluftreifen nach einem oder mehreren der vorangehenden Ansprüche, **dadurch gekennzeichnet, dass** das Sackloch (8) derart im Profilblock (6a) positioniert ist, dass die Sacklochkante wenigstens 5 mm von jeder Profilblockkante (9, 10) entfernt angeordnet ist.

4. Fahrzeugluftreifen nach einem oder mehreren der vorangehenden Ansprüche, **dadurch gekennzeichnet, dass** das Sackloch (8) an der Laufstreifenoberfläche einen Durchmesser (11) von 5 mm bis 15 mm, vorzugsweise von 7 mm bis 9mm, aufweist.

5. Fahrzeugluftreifen nach einem oder mehreren der vorangehenden Ansprüche, **dadurch gekennzeichnet, dass** das Sackloch (8) eine Tiefe (12) von bis zu 100% der maximalen Profiltiefe (13), vorzugsweise eine Tiefe (12) von 50% bis 100% der maximalen Profiltiefe (13) aufweist.

6. Fahrzeugluftreifen nach einem oder mehreren der vorangehenden Ansprüche, **dadurch gekennzeichnet, dass** eine Nut im Profilblock (6a) angeordnet ist, welche das Sackloch (8) mit einer diesen Profilblock (6a) begrenzenden Profilnut (4, 7) verbindet.

7. Fahrzeugluftreifen nach einem oder mehreren der vorangehenden Ansprüche, **dadurch gekennzeichnet, dass** das Sackloch (8) in Profilaufsicht eine runde oder ovale Form aufweist.

8. Fahrzeugluftreifen nach einem oder mehreren der vorangehenden Ansprüche, **dadurch gekennzeichnet, dass** das Sackloch (8) in etwa die Geometrie eines Kegelstumpfes aufweist, wobei der größere Durchmesser des Kegelstumpfes in der Ebene der Laufstreifenoberfläche und der kleinere Durchmesser im Profilelementinneren liegt sowie wobei die Längsachse in etwa der radialen Richtung des Reifens entspricht.

## Claims

1. Pneumatic vehicle tyre for a passenger car, suitable for speeds greater than or equal to 270 km/h, with a tread profile (1) with profile elements (3, 6), some of these profile elements (3, 6) having blind holes (8), the profile elements that have the blind holes (8) being exclusively profile blocks (6a) of a row of shoulder blocks that runs around over the circumference of the tyre and - in the tyre fitted on the vehicle - this row of shoulder blocks lying in the shoulder region (5a) facing the interior of the vehicle,
**characterized**
**in that** - with reference to the circumferential direction of the tyre - the blind hole (8) is arranged in the rear half of the profile block, containing the run-out edge (9) of the profile block (6a).

2. Pneumatic vehicle tyre according to Claim 1, **characterized in that** each profile block (6a) of the row of shoulder blocks that lies in the shoulder region (5a) facing the interior of the vehicle has a blind hole (8).

3. Pneumatic vehicle tyre according to one or more of the preceding claims, **characterized in that** the blind hole (8) is positioned in the profile block (6a) in such a way that the edge of the blind hole is arranged at least 5 mm away from each edge (9, 10) of the profile block.

4. Pneumatic vehicle tyre according to one or more of the preceding claims, **characterized in that** the blind hole (8) has on the surface of the tread strip a diameter (11) of 5 mm to 15 mm, preferably of 7 mm to 9 mm.

5. Pneumatic vehicle tyre according to one or more of the preceding claims, **characterized in that** the blind hole (8) has a depth (12) of up to 100% of the maximum profile depth (13), preferably a depth (12) of 50% to 100% of the maximum profile depth (13).

6. Pneumatic vehicle tyre according to one or more of the preceding claims, **characterized in that** arranged in the profile block (6a) there is a groove that connects the blind hole (8) to a profile groove (4, 7) adjacent to this profile block (6a).

7. Pneumatic vehicle tyre according to one or more of the preceding claims, **characterized in that**, in the plan view of the profile, the blind hole (8) has a round or oval form.

8. Pneumatic vehicle tyre according to one or more of the preceding claims, **characterized in that** the blind hole (8) has approximately the geometry of a truncated cone, the greater diameter of the truncated cone lying in the plane of the surface of the tread strip and the smaller diameter lying in the interior of the profile element, and the longitudinal axis corresponding approximately to the radial direction of the tyre.

## Revendications

1. Bandage pneumatique pour roue de voiture automobile, convenant pour des vitesses supérieures ou égales à 270 km/h et présentant un profil (1) de bande de roulement doté d'éléments profilés (3, 6),
certains de ces éléments profilés (3, 6) présentant des trous aveugles (8), les éléments profilés qui présentent les trous aveugles (8) étant exclusivement des blocs profilés (6a) d'une rangée de blocs d'épaulement qui entoure la périphérie du bandage de roue, ces rangées de blocs d'épaulement étant situées dans la partie (5a) d'épaulement orientée vers l'intérieur du véhicule lorsque le bandage de roue est monté sur le véhicule,
**caractérisé en ce que**
par rapport à la direction périphérique du bandage de roue, le trou aveugle (8) est disposé dans la moitié arrière du bloc profilé qui contient le bord de fuite (9) du bloc profilé (6a).

2. Bandage pneumatique pour roue de véhicule automobile selon la revendication 1, **caractérisé en ce que** chaque bloc profilé (6a) de la rangée de blocs profilés qui est situé dans la zone d'épaulement (5a) tournée vers l'intérieur du véhicule présente un trou aveugle (8).

3. Bandage pneumatique pour roue de véhicule automobile selon l'une ou plusieurs des revendications précédentes, **caractérisé en ce que** le trou aveugle (8) est disposé dans le bloc profilé (6a) de telle sorte que le bord du trou aveugle soit disposé à une distance d'au moins 5 mm de chaque bord (9, 10) du bloc profilé.

4. Bandage pneumatique pour roue de véhicule automobile selon l'une ou plusieurs des revendications précédentes, **caractérisé en ce que** le trou aveugle (8) présente sur la surface de la bande de roulement un diamètre (11) de 5 mm à 15 mm et de préférence de 7 mm à 9 mm.

5. Bandage pneumatique pour roue de véhicule automobile selon l'une ou plusieurs des revendications précédentes, **caractérisé en ce que** le trou aveugle (8) présente une profondeur (12) qui peut atteindre 100 % de la profondeur maximale (13) du profil, et de préférence une profondeur (12) qui représente de 50 % à 100 % de la profondeur maximale (13) du profil.

6. Bandage pneumatique pour roue de véhicule automobile selon l'une ou plusieurs des revendications précédentes, **caractérisé en ce qu'**une rainure qui relie le trou aveugle (8) à une rainure profilée (4, 7) qui délimite ce bloc profilé (6a) est disposée dans le bloc profilé (6a).

7. Bandage pneumatique pour roue de véhicule automobile selon l'une ou plusieurs des revendications précédentes, **caractérisé en ce que** le trou aveugle (8) présente une forme arrondie ou ovale dans une vue en plan sur le profil.

8. Bandage pneumatique pour roue de véhicule automobile selon l'une ou plusieurs des revendications précédentes, **caractérisé en ce que** le trou aveugle (8) présente sensiblement la géométrie d'un tronc de cône, le plus grand diamètre du tronc de cône étant situé dans le plan de la surface de la bande de roulement et le plus petit diamètre à l'intérieur de l'élément profilé, l'axe longitudinal correspondant sensiblement à la direction radiale du bandage de roue.
